# EUROPEAN PATENT APPLICATION

(11) **EP 0 574 352 A1**
(43) Date of publication of application: **15.12.1993**
(21) Application number: 93810399.1
(22) Date of filing: 02.06.1993
(51) Int. Cl.: C08F 291/18, C08J 7/18, G02B 1/04

(54) **Process for graft polymerization on surfaces of preformed substrates to modify surface properties**

(30) Priority: 09.06.1992 US 895964
(71) Applicant: CIBA-GEIGY AG, CH-4002 Basel (CH)
(72) Inventor: Janssen, Robert A., Alpharetta, GA 30202 (US); Ajello, Ellen M., Decatur, GA 30033 (US); Auten, Richard D., Cumming, GA 30130 (US); Nomura, Glenn S., Atlanta, GA 30307 (US); Shank, Thomas E., Duluth, GA 30136 (US)

(57) **Abstract**

This invention relates to a process for modifying the surface characteristics of a preformed polymer substrate to impart altered properties thereto by graft polymerization on the substrate which includes: placing the polymer substrate in a plasma to form free radicals on the substrate; contacting the substrate having free radicals with oxygen to form hydroperoxy groups on the surface of the substrate; and graft polymerizing an ethylenically unsaturated monomer and a cross-linking agent onto the surface of the polymer substrate.

## Description

This invention is to a process for modifying the surfaces of preformed polymer substrates by the controlled graft polymerization thereon of selected ethylencially unsaturated monomers and to products made by said process.

Graft polymerization per se has long been known in the art with many graft copolymers such as ABS (acrylonitrile butadiene/styrene) resins achieving considerable commercial success.

It has also been known in the art that various vinylic monomers can be graft polymerized onto polymer substrates which have been first treated with ionizing radiation in the presence of oxygen or with ozone to form peroxy groups on the surface of said substrate. U.S. Patent Nos. 3,008,920 and 3,070,573 teach the grafting of selected monomers onto ozonated polymer substrates.

While such a process would in theory seem to be a panacean method to modify at will the surface characteristics of any polymer substrate, such is not the case as is seen in the teachings of U.S. Patent Nos. 4,311,573 and 4,589,964.

The objective of such graft polymerization is to modify the surface of the polymer substrate without causing major changes in the physical characteristics of the substrate as a whole.

Problems have also arisen when such a graft polymerization process is carried out. One serious complication involves graft polymerization of the vinylic monomer onto the substrate as desired, but with the simultaneous and undesired homopolymerization of the vinylic monomer. This problem can be minimized by carrying out the graft polymerization process in the presence of a metal redox system using a variable valence metal ion in the reduced state to convert any hydroxyl free radical present to hydroxyl ion and thus minimize the simultaneous homopolymerization problem. See U.S. Patent Nos. 3,008,920, 4,311,573 and 4,589,964.

U.S. Patent Nos. 4,311,573 and 4,589,964 teach that another problem encountered in the surface grafting of a preformed polymeric substrate concerns depth and density control of the graft. If the bulk properties of the substrate are to be retained, then the graft depth should be no greater than necessary to modify the surface characteristics of the article. Grafts of excessive depth, grafts of insufficient density to achieve the desired property modification and the swelling and degradation of the substrate article during the process are serious problems plaguing this panacean process.

U.S. Patent Nos. 4,311,573 and 4,589,964 teach a method aimed at inhibiting homopolymerization, at controlling graft depth and at accelerating graft polymerization to increase graft density, namely by carrying out the graft polymerization in the presence of a variable metal ion (ferrous) and a complexing agent (squaric acid) to control mobility of said ions.

U.S. Patent No. 4,968,532 discloses a process of modifying the surface characteristics of a preformed polymeric substrate to impart hydrophilicity, hydrophobicity or other desired properties thereto which includes peroxidizing and hydroperoxidizing the surface of the preformed substrate using ozone and directing the subsequent graft polymerization of selected ethylenically unsaturated monomers to the surface of the substrate to achieve the desired alteration of substrate surface characteristics while maintaining substrate structural integrity. The hydroperoxides are, however, generated not only at the surface of the polymeric structure but also at the interior portion of the material. While such penetration may be perfectly suited for most intended uses, in some instances, such as extremely thin films and membranes, the presence of interior hydroperoxides can cause material discoloring and distortion upon subsequent graft polymerization. For those instances, a process for generating hydroperoxides strictly to the surface of the substrate is needed.

One object of this invention is to provide a facile process for modifying the surface characteristics of a preformed polymeric substrate to impart desired properties thereto.

Another object of this invention is to generate hydroperoxides on the surface of a substrate with minimum penetration to the substrate interior.

The present invention relates to a process for modifying the surface characteristics of a preformed polymer substrate to impart altered properties thereto by graft polymerization on the substrate. The substrate is placed in a plasma, such as Argon or Helium in plasma form, to form free radicals on its outmost surfaces, then contacted with oxygen to form hydroperoxy groups from the free radicals, and graft polymerizing an ethylenically unsaturated monomer onto the surface.

The instant invention is to a process for modifying the surface characteristics of a preformed polymer substrate to impart hydrophilicity, hydrophobicity or other desired properties thereto by graft polymerization on the substrate. This is accomplished by placing the polymer substrate in a radical generating plasma to form free radicals on the substrate and contacting the substrate having free radicals with oxygen to form hydroperoxy groups on the surface of the substrate. While it is preferred that the radical generating plasma be Argon in plasma form, other radical generating gases, such as helium or other noble gases in plasma form, may be used. In preliminary steps in the instant process, the polymer substrate can be saturated or swollen with a liquid either before or after being contacted with the radical generating plasma to form the hydroperoxy groups. The hydroperoxy groups may be subsequently activated and graft polymerized onto by an aqueous redox system, such as ferrous ion. The hydroperoxides will be limited to a depth of a few hundred Angstroms, and therefore the integrity of the substrate material will be preserved.

Upon thermal or otherwise induced decomposition, the hydroperoxy groups cleave into two active free radicals. One is attached to the polymer surface and is capable of initiating graft polymerization thereon while the other is a free hydroxyl radical not attached to the surface. This latter free radical is available to initiate homopolymerization of the monomer unless such homopolymerization is inhibited or suppressed.

U.S. Patent Nos. 3,008,920 and 4,589,964 teach that an effective homopolymerization-inhibiting agent is the cuprous, ferrous or another variable valence transiton metal ion such as those of cobalt, manganese, molybdenum, tin, indium, cerium, chromium, thallium and vanadium. A preferred metal salt providing such metal ion is ferrous ammonium sulfate, although other ferrous salts such as ferrous sulfate, ferrous chloride, ferrous iodide and ferrous bromide can be used as well.

These reduced valence (-ous) salts react with the hydroxyl free radical in a redox system to produce the hydroxyl ion and the oxidized (-ic) salt. With the concentration of hydroxyl free radicals thus minimized or eliminated, there is no initiator for the homopolymerization which is now effectively suppressed.

Since in general the presence of homopolymer unattached to the surface of the substrate leads to high extractables and unstable surface characteristics, a homopolymerization-inhibiting agent is usually present in the graft polymerization step of the instant process.

However, there is one variation of the instant process where crosslinked homopolymerization is an important aspect of providing a method of encapsulating a substrate by an envelope of the homopolymer. In this variation of the instant process, the ethylenically unsaturated monomer is allowed to be initiated, with a reduced ferrous ion concentration, both by the active free radicals attached to the surface of the substrate as well as by the free active hydroxyl free radical present in the system. No or little homopolymerization-inhibiting agent is present in this variation. The entire hydrogel polymer network is covalently bound in a three-dimensional structure through the presence of a crosslinking agent.

The encapsulation of materials with a protective coating which can be removed in a controlled fashion, as by weathering or by exposure to a period in the soil, is a utility for products made by this process variation. Protective coatings for seeds is contemplated.

It is known that the use of variable valence metal ions, for example ferrous or cuprous, can inhibit homopolymerization during graft polymerization of a substrate containing hydroperoxy groups. However, while the ferrous ion inhibits homopolymerization, there is a limitation in its use since such ions subsequently penetrate into the polymeric substrate allowing for the desired graft polymerization to occur at an undesired spot, namely in the interior of the substrate.

The effect of this graft polymerization at the wrong place is a distortion of the substrate with a concomitant loss in physical properties and dimensional stability and integrity. Such distortion is generally undesirable for obvious reasons and in the contact lens field is intolerable. However, with the generation of hydroperoxy groups by a plasma, this problem is eliminated. This is because the chemical conversion is strictly limited to only a depth of several hundred Angstroms.

Another aspect of the instant invention is the ability to create a soft polymer skirt around the periphery of a rigid polymer contact lens. Current technology to prepare such modified lenses is complex, laborious and prohibitively uneconomic.

The instant process, however, affords a facile route for the production of such modified lenses. Following the formation of hydroperoxy groups on the lens substrate, the lens is placed in a mold where the center of the lens is covered and where the periphery of said lens is exposed to an aqueous grafting solution containing a hydrophilic monomer and crosslinking agent. The grafting solution will contain an appropriate mixture of hydrophilic and crosslinking monomers to impart the desired properties required for the soft polymer skirt of the contact lens to give the rigid contact lens greatly improved eye comfort and other ancillary benefits not normally associated with rigid contact lenses.

The filled mold containing the appropriate grafting monomers is exposed to UV light. This irradiation decomposes the hydroperoxy groups present on the peripheral portion of the lens to initiate graft and crosslinked copolymerization of the monomer mixture in the mold to form a soft polymer skirt of desired properties firmly bonded via the grafts to the periphery of the rigid contact lens.

The preformed polymeric substrate which can be used in this process can be any fabricated polymeric product such as a film, fiber, pellicle, device or object including contact lenses whose surface characteristics are in need of modifying in some fashion to impart hydrophilicity, hydrophobicity, dyeability (tinting), spacity, diffraction differences, wettability, bonding characteristics, oxygen permeability, bactericidal properties, lubricity, and the like.

The only requirement is that the polymer from which the fabricated product is made must itself have a hydrocarbon group somewhere in its structure making it amenable to hydroperoxidation when exposed to the radical generating plasma to form hydroperoxy groups on the preformed polymeric substrate surface.

Polymeric materials useful in this instant invention include inter alia polyolefins, polyesters, polyamides, cellulosics, polyurethanes, non-silicone hydrogels, hydrophilic polysiloxanes, hydrophobic polysiloxanes, polymers containing poly(alkylene oxide) units, polycarbonates, silicone rubber, natural and synthetic rubber, epoxy resins, polyvinyl chloride, polystyrene, poly(methyl methacrylate) and copolymers and the like.

The hydroperoxy groups are conveniently introduced onto the surface of the preformed polymeric substrate by subjecting the substrate to a radical generating plasma, including noble gases, such as Argon or Helium. This can be done by appropriately suspending, placing or otherwise fixing the preformed substrate in a chamber or vessel so that the surfaces to be modified will be intimately contacted with the plasma and then followed by exposure to diatomic oxygen. The residual radicals on the substrate will then react with the oxygen to result in a peroxy radical which then, by hydrogen abstraction, will ultimately produce a hydroperoxide. Generally the time required is less than one hour, usually about 30 minutes.

The reaction temperature is generally not critical, and the reaction can be conducted over a wide temperature range from between 0° and 100°C. For convenience ambient temperatures are preferred.

Since the substrate contains hydroperoxy groups which are unstable when raised to elevated temperatures, the substrate can be kept for long periods of time (several months) at low temperatures (0° to 20° C.) without loss of the peroxy and hydroperoxy groups.

In order to prevent undesired changes in overall polymer properties involving the basic integrity of the substrate itself, it is desirable to prevent or at least to minimize any subsequent grafting of the modifying monomer by graft polymerization anywhere on the preformed polymer substrate except on the surface of said substrate.

Generally, it requires only a relatively small amount of material (by weight) to be actually grafted onto the surface of a polymer substrate to achieve the desired modification in the substrate surface properties. The grafting may be followed by dying the lens, such as set forth in U.S. Patent Nos. 4,468,229, 4,553,975 and 4,559,059, all to Su.

The graft polymerization is generally carried out using an aqueous solution of an ethylenically unsaturated monomer or mixture of monomers capable to undergoing graft addition polymerization onto the surface of the substrate. In those cases where the monomer is not appreciably soluble in water, a cosolvent, preferably tert-butyl alcohol, is used to enhance the solubility of the monomer in the aqueous graft polymerization system. Additionally where indicated, the graft polymerization can be carried out inthe presence of actinic radiation with or without the presence of a photoinitiator.

The choice of the monomer or monomers depends on the nature of the substrate and on the particular surface modification desired. Thus the monomers may be hydrophilic, hydrophobic, crosslinking agents, dyesites, bactericidal or with any of a wide gamut of properties as required to achieve the modification desired.

Suitable hydrophilic monomers include generally water soluble conventional vinyl monomers such as:
acrylates and methacrylates of the general structure 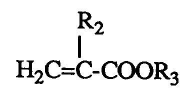
where R₂ is hydrogen or methyl and R₃ is hydrogen or is an aliphatic hydrocarbon group of up to about 10 carbon atoms substituted by one or more water solubilizing groups such as carboxy, hydroxy, amino, lower alkylamino, lower dialkylamino, a polyethylene oxide group with from 2 to about 100 repeating units, or substituted by one or more sulfate, phosphate, sulfonate, phosphonate, carboxamido, sulfonamido or phosphonamido groups, or mixtures thereof;
acrylamides and methacrylamides of the formula 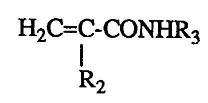
where R₂ and R₃ are as defined above;
acrylamides and methacrylamides of the formula 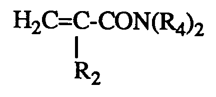
where R₄ is lower alkyl of 1 to 3 carbon atoms and R₂ is as defined above;
maleates and fumarates of the formula

R₃OOCH=CH-COOR₃

wherein R₃ is as defined above;
vinyl ethers of the formula

H₂C=CH-O-R₃

where R₃ is as defined above;
aliphatic vinyl compounds of the formula

R₂CH=CHR₃

where R₂ is as defined above and R₃ is as defined above with the proviso that R₃ is other than hydrogen;
and vinyl substituted heterocycles, such as vinyl pyridines, piperidines and imidazoles and N-vinyl lactams, such as N-vinyl-2-pyrrolidone.

Included among the useful water soluble monomers are: 2-hydroxyethyl-, 2- and 3-hydroxypropyl-, 2,3-dihydroxypropyl-, polyethoxyethyl-, and polyethoxypropyl acrylates, methacrylates, acrylamides and methacrylamides; acrylamide, methacrylamide, N-methylacrylamide, N-methylmethacrylamide, N,N-dimethylacrylamide, N,N-dimethylmethacrylamide; N,N-dimethyl- and N,N-diethyl-aminoethyl acrylate and methacrylate and the corresponding acrylamides and methacrylamides; 2- and 4-vinylpyridine; 4- and 2-methyl-5-vinylpyridine; N-methyl-4-vinylpiperidine; 2-methyl-1-vinylimidazole; N,N-dimethylallylamine; dimethylaminoethyl vinyl ether, N-vinylpyrrolidone; acrylic and methacrylic acid; itaconic, crotonic, fumaric and maleic acids and the lower hydroxyalkyl mono and diesters thereof, such as the 2-hydroxyethyl fumarate and maleate, sodium acrylate and methacrylate; maleic anhydride; 2-methacryloyloxyethylsulfonic acid and allylsulfonic acid.

Preferred water soluble monomers include 2-hydroxyethyl methacrylate; N,N-dimethylacrylamide; acrylic acid and methacrylic acid; and most preferably 2-hydroxyethyl methacrylate.

Suitable hydrophobic copolymerizable monomers include water insoluble conventional vinyl monomers such as:
acrylates and methacrylates of the general formula 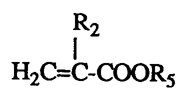
where R₂ is as defined above and R₅ is a straight chain or branched aliphatic, cycloaliphatic or aromatic group having up to 20 carbon atoms which is unsubstituted or substituted by one or more alkoxy, alkanoyloxy or alkyl of up to 12 carbon atoms, or by halo, especially chloro or preferably fluoro, or C₃-C₅ polyalkyleneoxy of 2 to about 100 units;
acrylamides and methacylamides of the general formula 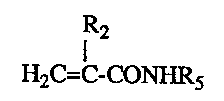
where R₂ and R₅ are defined above;
vinyl ethers of the formula

H₂C=CH-O-R₅

where R₅ is as defined above;
vinyl esters of the formula

H₂C=CH-OCO-R₅

where R₅ is as defined above;
maleates and fumarates of the formula

R₅OOC-HC=CH-COOR₅

where R₅ is as defined above;
and vinylic substituted hydrocarbons of the formula

R₂CH=CHR₅

where R₂ and R₅ are as defined above.

Useful hydrophobic monomers include, for example:
methyl, ethyl, propyl, isopropyl, butyl, ethoxyethyl, methoxyethyl, ethoxypropyl, phenyl, benzyl, cyclohexyl, hexafluoroisopropyl or n-octyl-acrylates and -methacrylates as well as the corresponding acrylamides and methacrylamides; dimethyl fumarate, dimethyl maleate, diethyl fumarate, methyl vinyl ether, ethoxyethyl vinyl ether, vinyl acetate, vinyl propionate, vinyl benzoate, acrylonitrile, styrene, alpha-methylstyrene, 1-hexene, vinyl chloride, vinyl methyl ketone, vinyl stearate, 2-hexene and 2-ethylhexyl methacrylate.

Suitable crosslinking agents are di- or polyethylenically unsaturated monomers which are essential components of the polymers of this invention contain two or more moieties selected from the groups of acrylates and methacrylates, acrylamides and methacrylamides, vinylethers, styrene, fumarate and itaconate or allyl. Typical representatives include the diacrylates and dimethacrylates of 1,2-ethylene glycol, 1,2- and 1,3-propanediol and of 1,3- and 1,4-butane-, 1,5-pentane- and 1,6-hexanediol; the diacrylates and dimethacrylates of diethylene-, triethylene- and tetraethylene glycol, and of neopentyl glycol, di-(2-hydroxyethyl) sulfone and thiodiethylene glycol; trimethylolpropane triacrylate and trimethacrylate, di-trimethylolpropane tetraacrylate, pentaerythritol tetraacrylate and tetramethacrylate, di-pentaerythritol monohydroxy pentaacrylate; bisphenol-A- and ethoxylated bisphenol-A-dimethacrylate, tris(2-hydroxyethyl)-isocyanurate triacrylate; allyl acrylate and methacrylate; diallyl phthalate, triallyl melamine; methylene-bisacrylamide, ethylene-bismethacrylamide, divinylbenzene, divinyltoluene, divinyl sulfone, divinylether, butanediol divinylether, also useful are the reaction products of equivalent amounts of aliphatic, cycloaliphatic and aromatic diisocyanates or of vinyl-unsaturated isocyanates with hydroxy or amino substituted acrylates and methacrylates, for example the reaction products of hexamethylene-1,6-dlisocyanate, 3,3,4(4,4,3)-trimethylhexane-1,6-diisocyanate, 4,4'-diisocyanato-diphenylmethane or isophorone diisocyanate with two moles 2-hydroxyethyl- or N-t-butyl-2-aminoethyl acrylate or methacrylate, 3-hydroxypropyl methacrylamide, or of 1 mol 2-ioscyanatoethyl methacrylate with 1 mol hydroxyethyl- or N-t-butyl-2-aminoethyl acrylate or methacrylate, or 3-hydroxypropyl methacrylamide. Also useful are silicone containing diacrylates and dimethacrylates, for example bis(-3-methacryloxypropyl)-tetramethyl disiloxane and bis(-3-methacryloxypropyl)-tetra(trimethylsiloxy) disiloxane, and fluorinated compounds, like 2-(1-thia-2,2,3,3-tetrahydro)-tridecafluorononyl butane-1,4-diol di(meth)acrylate.

Based on the total amount of graft polymer, these cross-linking agents can typically be present in amounts from 0.01-20 % by weight, preferably from 0.1-10 % by weight, more preferably in amounts of 0.5-7 % by weight.

The following examples are presented for the purpose of illustration only and are not to be construed to limit the nature or scope of the instant invention in any manner whatsoever.

### EXAMPLE 1 Grafting Onto Hydrophobic Silicone

Four silicone contact lenses which, in the hydrated condition, contain less than 0.5 percent water of hydration are dried in a vacuum oven and weighed. Three lenses are plasma treated using Argon gas with conditions of 90 seconds reaction time at 10 watts of power. The fourth lens is used as a control. The lenses are then exposed to diatomic oxygen for five minutes after the Argon plasma After the oxygen treatment, the lenses are placed in water with a nitrogen purge for one hour. Three solutions are made for grafting and set at 34° Celsius. The solutions are as follows:
1) 10 Percent Dimethylacrylamide
   3.0 grams dimethylacrylamide + 27.0 grams water + 0.075 grams ferrous ammonium sulfate hexahydrate.
2) 20 Percent Dimethylacrylamide
   6.0 grams dimethylacrylamide + 24.0 grams water + 0.075 grams ferrous ammonium sulfate hexahydrate.
3) 50 percent Dimethylacrylamide
   15.0 grams dimethylacrylamide + 15.0 grams water + 0.075 grams ferrous ammonium sulfate hexahydrate.

The lenses are put into the respective solutions, with a continuous nitrogen purge, and left to react for approximately 20 hours. After the lenses has grafted, they are placed into water and extracted for approximately 24 hours. The lenses are dried in a vacuum oven including the control for approximately 24 hours and weighed until a stable weight is obtained. The following is the data of the gravimetric determination of poly-dimethyl acrylamide on silicone lenses:

| Dimethylacrylamide Concentration | Graft Weight/Area |
|---|---|
| Control | 0.09 x 10⁻⁴mg/mm² |
| 10 percent | 5.9 x 10⁻⁴mg/mm² |
| 20 percent | 36.7 x 10⁻⁴mg/mm² |
| 50 percent | 103 x 10⁻⁴mg/mm² |

As can be seen there is a weight increase in the lens after being placed in the grafting solution. This graft weight of the polydimethylacrylamide is in proportion to the concentration of dimethylacrylamide in the grafting solution.

### EXAMPLE 2 Vinyl Sulfone Tinting Onto Grafted Silicone

A hydrophilic silicone contact lens is placed in a plasma generator and reacted for 90 seconds at 10 watts of power using Argon gas. After the plasma treatment the lens is exposed to diatomic oxygen for five minutes. The lens is taken and placed in water with nitrogen purge for one hour. The lens is taken and placed in a solution, under a continuous nitrogen purge, at 34° Celsius containing 3.0 grams of 2-hydroxy ethyl methacrylate, 27.0 grams of water, and 0.075 grams ferrous ammonium sulfate hexahydrate. The graft solution is exposed to the lens for 20 hours. After the grafting has taken place as observed by the hydrophilic nature of the lens, the lens grafted with 2-hydroxy ethyl methacrylate is placed in a solution containing 40 milliliters of 1 percent Brilliant Blue Dye Solution and 133 milliliters of 10 percent sodium phosphate tribasic dodecahydrate. The lens is taken out of the solution after one hour. The dye has tinted the lens. Also after water extractions and a one hour water boil, the lens still remains tinted. A non-plasma treated silicone lens is also placed in the dye solution, but the lens remains clear as observed by visual inspection.

### EXAMPLE 3 Grafting Onto Hydrophilic Silicone

A dried contact lens composed of a copolymer of poly siloxane - polyethyleneglycol, which in the hydrated state contains 47 percent water, is placed in a Argon plasma and left to react for 90 seconds at 10 watts of power. After the plasma treatment, the lens is exposed to diatomic oxygen for five minutes. The lens is placed in a grafting solution, under a continuous nitrogen purge, containing 180 grams water and 20 grams dimethylacrylamide and 0.50 grams ferrous ammonium sulfate hexahydrate and left to react for 18 hours at 34° Celsius. The lens is more lubricous and hydrophilic than the control lens, thus indicating that a graft has occurred on the surface of the treated contact lens.

### EXAMPLE 4 Grafting Onto Polyethylene and Polybutadiene-styrene

A polyethylene (PE) strip and a poly butadiene-styrene (PBS) strip are placed in a vacuum oven to dry. The strip of polyethylene is plasma treated using Argon gas with conditions of 90 seconds reaction time at 10 watts of power. The PE and PBS are exposed to diatomic oxygen for 5 minutes after the Argon plasma. After the oxygen treatment the strips are placed in water with a nitrogen purge for one hour. A solution for grafting is made with 180 grams of water, 20 grams of dimethyl acrylamide and 0.5 grams of ferrous ammonium sulfate hexahydrate. The strips are put into the grafting solution at 34° Celsius and left to react for approximately 18 hours under a continuous nitrogen purge. The articles are more lubricous and hydrophilic than the control material, thus indicating that a graft has occurred on the surface of the treated material.

### EXAMPLE 5 Determination of Hydroperoxide Concentration on Plasma Treated Lenses

Four dried silicone lenses, which normally contain less than 0.5 percent water of hydration, are placed in a plasma generator and reacted for 90 seconds at 10 watts of power using Argon gas. After the plasma treatment the lenses are exposed to diatomic oxygen for five minutes. Hydroperoxide concentration on the lenses are then evaluated by spectrophotometric determination of liberated iodine. Analysis of the plasma treated lenses in conjunction with a blank yielded a hydroperoxide concentration of 3.2 x 10⁻¹¹ moles per mm² of lens surface area on the plasma treated lenses. Therefore, it should be seen that hydroperoxides have been formed on the surface of the lenses by the use of the Argon plasma treatment in concert with exposure to diatomic oxygen.

### EXAMPLE 6 Contact Angle Measurement

Two silicone contact lenses, which in the hydrated state, contain less than 0.5 percent water of hydration, are dried in a vacuum oven. A lens is plasma treated using Argon gas with conditions of 90 seconds reaction time at 10 watts of power. The second lens is used as a control. The lens that is plasma treated is exposed to diatomic oxygen for five minutes after Argon plasma Then the lens is placed in water with a nitrogen purge for one hour. The lens is then placed in a grafting solution composed of 3.0 grams dimethylacrylamide, 27.0 grams water, and 0.075 grams ferrous ammonium sulfate hexahydrate, and left to react for approximately 20 hours plus extracted in boiling water for one hour. After the lens has grafted, it is placed into water and extracted for approximately 24 hours. The control lens and the grafted lens are measured for contact angle. The control measures 69° and the grafted lens measures 0°.

This example demonstrates that the plasma treatment with the accompanying grafting solution produces a grafted lens surface with enhanced wettability.

### EXAMPLE 7 Optimizing Plasma Time

Dried silicon contact lenses, which contained less than 0.5 percent water in the hydrated state, are placed into plasma chamber and treated with a Argon plasma for times ranging from 30 seconds to 4 minutes at 10 watts of power. The lenses are then exposed to diatomic oxygen for 5 minutes after the Argon plasma After the oxygen treatment, the lenses are placed into water with a N₂ purge for one hour. A grafting solution containing ten percent dimethylacrylamide, 90 percent water and 0.25 percent ferrous ammonium sulfate hexahydrate is formulated and the lenses are placed into this grafting solution under a continuous nitrogen purge. Two hours later the lenses are removed and compared. Lenses plasma treated for 90 seconds and grafted for two hours are found to have the optimal graft as observed by surface wettability and lubricity.

### EXAMPLE 8 Process for Graft Polymerization on Surfaces of Preformed Substrates to Modify Surface Properties

A hydrophilic silicone contact lens is placed in a plasma generator and reacted for 90 seconds at 10 watts of power using Argon gas. After the plasma treatment the lens is exposed to diatomic oxygen for five minutes. The lens is taken and placed in water with nitrogen purge for one hour. The lens is taken and placed in a solution, under a continuous nitrogen purge, at 34° Celsius containing 3.0 grams of 2-hydroxy ethyl methacrylate, 27.0 grams of water, and 0.075 grams ferrous ammonium sulfate hexahydrate. The graft solution is exposed to the lens for 20 hours. After the grafting has taken place as observed by the hydrophilic nature of the lens, the lens grafted 2-hydroxy ethyl methacrylate is placed in a solution containing 40 milliliters of 1 percent [2-anthracene-sulfonic acid, 1-amino-9, 10-dihydro-9, 10-dioxo-4-((3-((2-(sulfooxy)ethyl)sulfonyl)phenyl)amino)-,-disodium salt], and 133 milliliters of 10 percent sodium phosphate tribasic dodecahydrate. The alkali converts the sulphato ester into vinyl sulphone by the removal of the weakly basic sulphate ion once a proton is eliminated from the alpha methylene group. The result of this nucleophilic addition reaction is a covalent bond between the carbon carbon double bond of the vinyl sulphone and the oxygen of the hydroxyl group of the 2-hydroxy ethyl methacrylate graft. The tinted lens is removed from the solution after one hour, and extracted in water and a one hour water boil. The lens retains its blue color.

### EXAMPLE 9 Grafting Onto Hydrophilic Silicone

A dried contact lens composed of a copolymer of poly siloxane - polyethyleneglycol, which in the hydrated state contains 47 percent water, is placed in a Argon plasma and left to react for 90 seconds at 10 watts of power. After the plasma treatment, the lens is exposed to diatomic oxygen for five minutes. The lens is placed in a grafting solution, under a continuous nitrogen purge, containing 1 gram of methylene-bis acrylamide 180 grams water and 20 grams dimethylacrylamide and 0.50 grams ferrous ammonium sulfate hexahydrate and left to react for 18 hours at 34° Celsius. The lens is more lubricous and hydrophilic than the control lens, thus indicating that a graft has occurred on the surface of the treated contact lens. The addition of the cross-linker produces a more durable graft onto the lens.

### EXAMPLE 10 Grafting Onto Polyethylene and Polybutadiene-styrene

A polyethylene (PE) strip and a poly butadiene-styrene (PBS) strip are placed in a vacuum oven to dry. The strip of polyethylene is plasma treated using Argon gas with conditions of 90 seconds reaction time at 10 watts of power. The PE and PBS are exposed to diatomic oxygen for 5 minutes after the Argon plasma After the oxygen treatment the strips are placed in water with a nitrogen purge for one hour. A solution for grafting is made with 180 grams of water, 20 grams of dimethyl acrylamide 2 grams of methylene-bis acrylamide and 0.5 grams of ferrous ammonium sulfate hexahydrate. The strips are put into the grafting solution at 34° Celsius and left to react for approximately 18 hours under a continuous nitrogen purge. The articles are more lubricous and hydrophilic than the control material, thus indicating that a graft has occurred on the surface of the treated material. The addition of the cross-linker produces a more durable graft onto the lens.

## Claims

1. A process for modifying the surface characteristics of a preformed polymer substrate to impart altered properties thereto by graft polymerization on said substrate which comprises: placing the polymer substrate in a plasma to form free radicals on the substrate; contacting the substrate having free radicals with oxygen to form hydroperoxy groups on the surface of the substrate; and graft polymerizing an ethylenically unsaturated monomer and a cross-linking agent onto the surface of the polymer substrate.

2. The process according to claim 1, wherein the cross-linking agent is present in an amount of 0.01-20 % by weight.

3. The process according to claim 1, wherein the cross-linking agent is present in an amount of 0.1-10 % by weight.

4. The process according to claim 1, wherein the cross-linking agent is present in an amount of 0.5-7 % by weight.

5. The process according to claim 1, wherein the plasma is a noble gas in plasma form.

6. The process according to claim 1, wherein the graft polymerization step is carried out in the presence of a variable transition metal ion to suppress homopolymerization during grafting of the ethylenically unsaturated monomers.

7. The process according to claim 1, wherein the variable transition metal ion is a ferrous salt.

8. The process according to claim 1, wherein the polymer substrate is an ophthalmic device.

9. The process according to claim 1, wherein the polymer substrate is a contact lens.

10. The process according to claim 1, wherein said oxygen is diatomic oxygen.

11. The process according to claim 5, wherein the plasma is argon in plasma form.

12. The process according to claim 5, wherein the plasma is helium in plasma form.

13. The process of claim 1, and further comprising dying the substrate.

14. The process of claim 13, wherein the dye is covalently bonded to the grafted substrate.

15. A contact lens produced according to the process of claim 1.

16. A tinted contact lens produced according to the process of claim 13.

17. A contact lens obtainable by a process according to claim 1.
